## Europäisches Patentamt
## European Patent Office
## Office européen des brevets

(11) Publication number: **0 232 152**
**A2**

# EUROPEAN PATENT APPLICATION

(21) Application number: **87300872.6**

(22) Date of filing: **30.01.87**

(51) Int. Cl.⁴: **H 02 K 33/18**

(30) Priority: **31.01.86 GB 8602408**

(43) Date of publication of application:
**12.08.87 Bulletin 87/33**

(84) Designated Contracting States:
**AT DE ES FR GB IT NL SE**

(71) Applicant: **Derritron Group Limited**
**River Gardens North Feltham Trading Estate**
**Feltham Middlesex TW14 0RD (GB)**

(72) Inventor: **d'Silva, John Robert**
**150 Tavistock Road**
**Fleet Hampshire GU13 8HG (GB)**

**Bolton, Hugh Robert**
**36 Castle Avenue Ewell**
**Epsom Surrey KT17 2PQ (GB)**

(74) Representative: **Arthur, George Fitzgerald et al**
**KILBURN & STRODE 30, John Street**
**London WC1N 2DD (GB)**

(54) **Electromagnetic vibrator.**

(57) An electromagnetic vibrator has a stator defining a direct magnetic field and constituted by a core 13 and a surrounding annular housing 14 containing a magnetising coil 17. There are annular upper and lower air gaps 15 and 16. The vibrating components includes a cylindrical conducting sleeve 24 in each air gap and carries a vibratory table 11. A.C. coils 18, 19, 21 and 22 are provided on the stator on the inner and outer surfaces of each of the annular air gaps. The vibratory member is mounted in hydrostatic bearings 26.

FIG.1.

**Description**

ELECTROMAGNETIC VIBRATOR

This invention relates to electromagnetic vibrators and one object is to provide a simple and compact construction which can give good performance and reproduce accurately vibration command waveforms.

GB-B-1202526 discloses a vibrator in which a stator defines an air gap with ι radial magnetic field extending across it and a vibratory element is mounted in the air gap to be free to vibrate parallel with the axis of the air gap.

In that vibrator the vibratory element is in the form of an A.C. excited coil with turns extending around the air gap.

According to the present invention the vibratory element is in the form of a ring or sleeve of electrically-conducting material, and A.C. coils are mounted on the stator at the air gap for generating circumferential alternating currents in the vibratory element.

The arrangement has the advantage that exciting current does not have to be applied to the vibratory element and electrical connetions only have to be made to static components.

While there may be a single annular air gap at one end it is preferred that there are two annular air gaps spaced apart along the axis of vibration, each with its electrically conducting vibratory ring. Then the rings will be interconnected or may, indeed, be separate parts of a continuous cylindrical or like ring.

The A.C. coils, when energised with alternating current, can induce circumferential alternating current in the vibratory ring which then cooperates with the radial D.C. field to impart vibratory movement to the ring at the alternating frequency.

In a preferred arrangement with two axially spaced air gaps the stator is generally annular with a cross section in the form of a C having upper and lower limbs defining two air gaps and an intermediate portion having either a channel for a D.C. magnetising coil or an annular permanent magnet for magnetising the stator.

The A.C. coils which are mounted on the stator can be on the annular part of the stator defining the outside of the or each air gap or can be on the external surface of the core defining the inner surface of the air gap, but preferably there is an A.C. coil on each surface, and thus on each side of the annular gap in which the ring is to vibrate. Each A.C. coil is conveniently mounted on a sleeve or the like of a material, that is both non-conducting and non-magnetic, or a ferrite, or possibly an inert material insulator, or a composite multilayer construction with interruptions which provide a path for A.C. flux which does not pass through the stator iron.

Preferably, there are fixed components holding an annular part of the stator in relation to a centre core of the stator and those components can then have bearings - preferably axial hydrostatic bearings - for the vibratory ring. Such bearings give substantial freedom to move in the direction of the vibratory axis, but are very stiff in directions perpendicular to that axis.

A vibratory table can be mounted from the bearings on the other side of the mounting element from the magnetic stator and ring.

The invention may be carried into practice in various ways, and one embodiment will now be described by way of example with reference to the accompanying drawings. in which:-

Figure 1 is a rather diagrammatic sectional elevation of an electromagnetic vibrator;

Figure 2 is a detail of Figure 1; and

Figure 3 is a diagram of the magnetic circuit components of an alternative embodiment.

The vibrator comprises a vibrating table 11 arranged to vibrate in the vertical direction in the figure in a stator 12.

The stator comprises a core 13 of carbon steel or other magnetic material positioned within an annular housing 14 also of carbon steel or similar material with a cross section as shown in the figure which is generally in the form of a C. The housing 14 defines with the upper and lower ends of the core 13 in the Figure a pair of annular air gaps 15 and 16 respectively opposite the inner ends of the horizontal limbs of the C-section; the gaps are axially aligned so that they are effectively axially separated parts of a thin cylindrical space extending arounmd the axis of the vibrator between the core and the housing 14.

The housing may be formed in various ways. One possiblity is to machine out a slot or channel midway along the length of the internal cylindrical surface of a steel tube to form the C-section. Another possibility is to provide three separate annular rings with the same outside diameter, one of which is radially thinner than the others by the depth of the channel. They can be assembled together by welding or bolting to form the C-section. Another possibility is to cast the housing 14. In that case it will probably be cast in two identical halves which can then be united by bolting along the plane perpendicular to the axis of the vibrator core 13 and midway along its height.

D.C. exciting coils 17 are positioned in the D.C. slot or channel 20 and they may be divided into a number of separately wound coils either annularly one within another or axially side by side, or both. They are energised in parallel in series from a D.C. source to magnetise the stator so that flux flows one way along the core 13, radially outwards across one of the gaps, through the C-section annular housing 14, and radially inwards through the other gap to the other end of the core 13.

A.C. coils are provided on the stator top and bottom on the inside and the outside of each of the air gaps. Thus, there are four A.C. coils, namely an upper inner coil 18, an upper outer coil 19, a lower inner coil 21, and a lower outer coil 22. The outer coils are mounted on the faces of the stator ring 14 facing the gaps 15 and 16 and the inner coils may be mounted in rebates in the top and bottom of the core 13. Each of the coils may be covered by a non-ferrous protective covering 23 which may be of a non-ferrous metal or of an insulating material. The A.C. coils are energised in series/parallel or series from an A.C. supply, and the effect is to produce two local axially-spaced toroidal alternating magnetic fields, one around each of the upper and lower air gaps 15 and 16.

A cylindrical sleeve 24 of, for example, aluminium alloy or similar material is positioned in each air gap and mounted in a manner to be described below to be capable of vibrating vertically with substantially no restraint, but not to be capable of free movement transversely of the vibration axis, that is in the horizontal direction of the figure. The sleeves are interconnected as shown at 30 to vibrate as one.

The local A.C. fields around the gaps induce eddy currents locally in the sleeves which extend circumferentially and so are at right angles to the D.C. field extending radially across the gap. The interaction of the eddy currents with the D.C. flux produces the vibratory movement vertically in the figure at the same frequency as that of the A.C. supply and with a force proportional to the product of the D.C. field and the eddy current intensity.

There is a static mounting plate 25 at each end of the vibrator, and the mounting plates fulfil two functions.

First of all, they provide the means for locating the core 13 centrally within the openings in the top and bottom of the stator housing 14 so that the stator constitutes a rigid assembly.

Secondly, the mounting plates 25 carry bearings for the vibratory sleeves 24. Thus, each of the mounting plates 25 has a circumferential ring of e.g. four axial bores 26, each arranged to act as the outer ring of a hydrostatic bearing by being provided at the central nozzle - one of which is indicated diagrammatically at 27 - with high pressure hydraulic fluid. The vibratory sleeves 24 are secured at their outer annular edges to four cylindrical posts 28 circumferentially spaced to correspond with the bores 26, and each constituting the inner member of one of the hydrostatic bearings.

The vibratory table 11 is mounted at the upper end of four upper posts 28. The lower ends of the lower posts 28 could be interconnected by an annular ring to give stability, but in some applications that will not be necessary. The lower end of the lower mounting plate 25 is closed by a closure 29.

An air filled bellows 31 positioned between the upper mounting plate 25 and the table 11 can define a reference position for the table midway between the extreme positions in the absence of any A.C. energisation of the A.C. coils. Thus, when those coils are energised vibration will start from that central reference position.

It may also be desirable to provide an arrangement of opposed light springs for providing a central reference position of the table if the vibrator is to be used other than in the vertical position shown, when the weight of the table acting on the bellows cannot be used for that purpose.

The size of the vibrator can be reduced by providing forced hydraulic cooling of either the D.C. coils, or the A.C. coils, or both, and in any design it is a question of deciding whether the reduction of the size merits the increased cost of the cooling system.

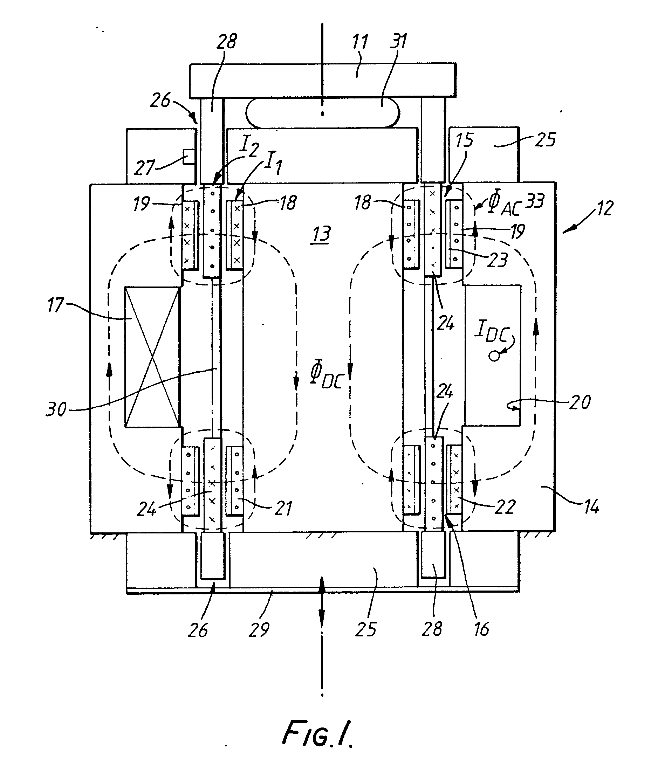

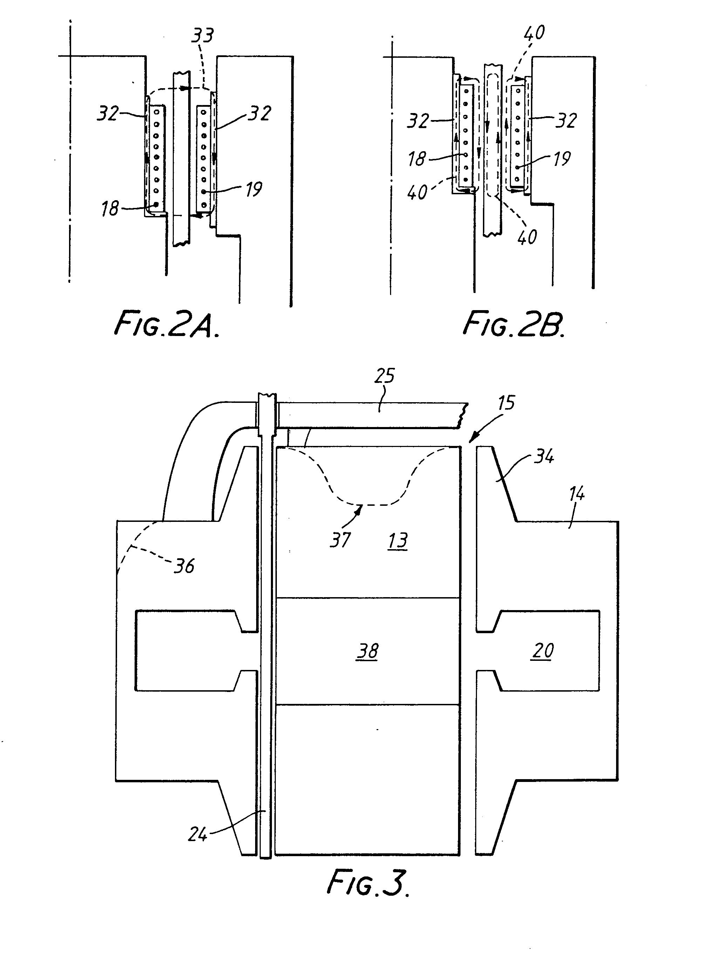

Figure 2 shows one way of mounting the A.C. coils 18 and 19. It is believed to be undesirable, particularly when operation is at high frequencies up to about 5 kHz, for the A.C. flux to flow through solid magnetic iron, and accordingly, each of the coils 18 and 19 is mounted on a component 32 providing a path for the higher frequency A.C. flux as indicated generally by the line 33 in Figure 2A. At low frequencies, the flux would penetrate the iron so that the A.C. flux path would be as shown in Figure 1 at 33 even where the components 32 are provided for higher frequency operation.

Figure 2B shows how some A.C. flux also occurs as shown at 40.

In the case of the outer coil 19, the component 32 may be just a cylindrical layer of inert material on the inner annular face of the stator pole and in the case of the inner winding 18 the element may be of angled section sitting in a rebate cut in the end of the core 13. The material of the components 32 could be an insulator or a ferrite material or a non-magnetic conductor or an interrupted multilayer composite, for example. Different arrangements are possible, but in general it is believed that the advantage of providing a flux path for the A.C. flux in this manner more than offsets the disadvantage of having to increase the width of the air gap. It will be noted from Figure 2 that it is generally preferred that the components 32 extend axially a little beyond each end of the coils mounted on them.

An alternative embodiment is shown in Figure 3 which is a very simplified diagrammatic view intended mainly to show just the magnetic circuit.

It will be seen that the annular housing 14 is smaller than shown in Figure 1, but is formed with extended pole pieces 34 defining the air gaps 15 with the ends of the core 13. The stator housing will preferably be a casting and probably a casting made in two identical halves secured together to leave the D.C. channel 20 for the D.C. coil 17.

Figure 3, which is diagrammatic, shows the shape of the components as having angles, but in practice the angles are likely to be rounded off as shown at 36 to save metal and weight at places where the flux density will be low.

The flux density will be low at the centres of the ends of the core 13 and accordingly they may be indented or otherwise shaped generally as indicated at 37 to save unnecessary steel.

The arrangement shown means that the flux density in the core 13 will be at a maximum in the middle section 38 of the core and accordingly that may be made of a material having a very high saturation flux density so that it will not go into saturation at the intensities experienced in practice. Such materials tend to be expensive and so are unlikely to be used throughout the length of the core where the flux density will be less.

The building up of the core in different layers with materials of different saturation flux densities may be considered to be a feature of the invention, as can the shaping of the ends of the core to suit the flux pattern.

It will be noticed that in the Figure 3 embodiment the extended poles are very closely spaced axially and by an amount comparable with the vibration stroke. Accordingly, the sleeve 24 will probably be a continuous length of, for example, aluminium alloy or similar tube of constant or varying cross-section instead of consisting of two axially separated sleeves with an appropriate interconnection 30 as in the embodiment of Figure 1.

There will also be end plates 25 for locating the core 13 centrally within the stator housing 14 and for providing bearings for the sleeve 24, but that is only shown diagrammatically in Figure 3.

One embodiment of the vibrator shown in Figure 3 has a core diameter of about 20 cm.

In Figures 1 and 3 there is an air gap at each end of the vibrator core and housing, but there may be application where there is a single air gap at one end only.

**Claims**

1. An electromagnetic vibrator comprising a magnetic stator (12) defining at least one annular air gap (15, 16) and having D.C. magnetising means (17) for establishing a radial magnetic field in the, or each, air gap, characterised by a vibratory element comprising a ring (24) in the, or each, air gap mounted to be free to vibrate parallel with the vibrator axis, and A.C. coils (18, 19, 21, 22) mounted on the stator (12) at the, or each, air gap for generating circumferential alternating currents in the vibratory element (24) to cooperate with the D.C. field across the gaps and impart vibratory movement to the vibratory element.

2. A vibrator as claimed in Claim 1 in which there are two annular air gaps (15, 16) spaced apart along the axis of vibration.

3. A vibrator as claimed in Claim 2 in which the D.C. magnetising means (17), for example, an electric coil, is positioned axially between the air gaps.

4. A vibrator as claimed in Claim 2 or Claim 3 in which the A.C. coils are mounted on the stator surfaces facing the air gaps.

5. A vibrator as claimed in Claim 4 in which the A.C. coils are mounted on the core (13), and/or on the parts (14) of the stator at the outside of the air gaps, facing the vibratory element (24).

6. A vibrator as claimed in any preceding claim, in which the, or each, A.C. coil is mounted on a sleeve (32) or the like of an inert material to provide a flux path for A.C. flux which does not substantially pass through the stator iron.

7. A vibrator as claimed in any of Claims 2 to 6 including means (30) interconnecteding the electrically conducting vibrator ring (24) in each gap so that they constitute together a rigid structure.

8. A vibrator as claimed in any of the preceding claims including end mouintings (25) for locating the components of the magnetic stator in relation to each other and defining bearings (26) for the vibratory element.

9. A vibrator as claimed in Claim 8 in which the bearings are hydrostatic bearings.

10. A vibrator as claimed in any of the preceding claims including a vibratory table (11) mounted on the vibratory element (24).

*Fig.1.*

FIG.2A.

FIG.2B.

FIG.3.